# EUROPEAN PATENT SPECIFICATION

(11) **EP 1 198 107 B1**
(45) Date of publication and mention of the grant of the patent: **28.11.2012**
(21) Application number: 01122369.0
(22) Date of filing: 19.09.2001
(51) Int. Cl.: H04W 28/06, H04L 29/08, H04L 1/18

(54) **Method for transmitting data from an RLC layer in a radio communication system**
Verfahren zur Übertragung von Daten aus RLC Schicht eines Funk-Kommunikationssystems
Procédé pour la transmission de données de la couche RLC dans un système de radiocommunication

(30) Priority: 07.10.2000 KR 2000059017; 18.05.2001 KR 2001027269
(43) Date of publication of application: 17.04.2002
(60) Divisional application: 10009274.1
(73) Proprietor: LG Electronics Inc., Youngdungpo-gu Seoul (KR)
(72) Inventor: Yi, Seung June, Seoul (KR); Yeo, Woon Young, Anyang-shi, Kyonggi-do (KR)
(74) Representative: TER MEER - STEINMEISTER & PARTNER GbR

(56) References cited:
- ETSI: "Universal Mobile Telecommunication System (UMTS); RLC Protocol Specification (3G TS 25.322 version 3.4.0 Release 1999)" XX, September 2000 (2000-09), page 1-5, 18-39 XP002261443
- ETSI: "Universal Mobile Telecommunication System (UMTS);RLC Protocol Specification (3G TS 25.322 version 3.1.2 Release 1999)" ETSI TS 125 322 V3.1.2, XX, XX, 1999, pages 1-48, XP002168713
- "Universal Mobile Telecommunication System (UMTS); RLC protocol specification (3GPP TS 25.322 Version 3.7.0 Release 1999)", ETSI TS 125 322 V3.7.0, XX, XX, 1 June 2001 (2001-06-01), pages 1-58, XP002212671,
- ALCATEL ET AL: "General clarifications", 3GPP DRAFT; R2-012187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Helsinki, Finland; 20010904, 4 September 2001 (2001-09-04), XP050118951, [retrieved on 2001-09-04]

## Description

### BACKGROUND OF THE INVENTION

### Field of the Invention

The present invention relates to a method for transmitting data from an RLC layer in a radio communication system, and more particularly, to a method for carrying out a SDU discard function in a radio communication system having an RLC layer.

### Background of the Related Art

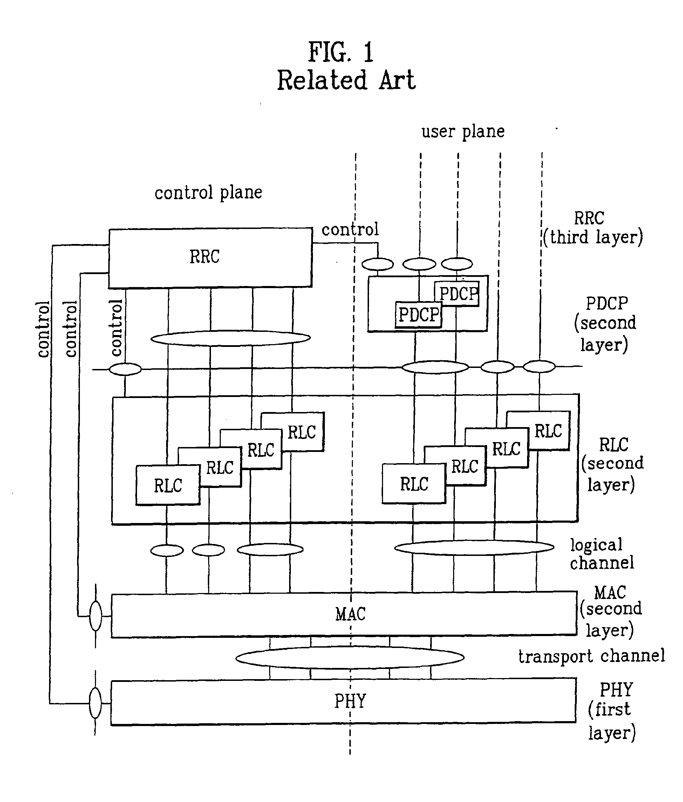

FIG. 1 illustrates an architectural diagram of a general radio communication system, in which an architecture of a radio interface protocol according to a radio access network standard of an European IMT-2000 UMTS(universal mobile telecommunication system).

Referring to FIG. 1, a radio link control(hereinafter abbreviated RLC) layer in a radio communication system as a second layer of 3GPP is a protocol layer controlling a data link. Moreover, the RLC layer corresponds to a second layer of an OSI 7-layered model. All the entities of the RLC layer are embodied by a radio resource control(hereinafter abbreviated RRC) layer as an upper layer. A radio interface protocol between a user equipment and UTRAN(UMTS terrestrial radio access network) includes a physical layer, a data link layer, and a network layer horizontally. Vertically, a protocol architecture is divided into a control plane for transferring a control signal(signaling) and a user plane for transmitting data information.

Specifically, on the control plane in FIG. 1 exist an RRC layer as a third layer, an RLC layer and a medium access control(hereinafter abbreviated MAC) layer as second layers, and a physical layer as a first layer. Moreover, in the user plane, RLC and MAC layers exist on the second layer, and the physical layer exists on the first layer. The physical layer provides the upper layer with an information transfer service using various radio transmission techniques and is connected to the MAC layer on the upper layer via transport channels through which data between the MAC and physical layers are transported therebetween. The transport channels are divided into a dedicated transport channel used for the user equipment exclusively and a common transport channel used for the user equipments in common.

The MAC layer provides a re-allotment service of a radio resource and MAC parameters. Such a service demands the re-allotment of the radio resource or the change of the MAC parameters. The MAC layer is connected to the RLC layer through a logical channel and provides various logical channels in accordance with the species of the transmission information. Generally, the control channel is used when information of the control plane is transmitted, while a traffic channel is used for transmitting information of the user plane.

The RLC layer provides the establishment and release of a radio link and carries out functions of segmentation and concatenation relating to RLC service data unit(hereinafter abbreviated SDU) coming down from an upper layer of the user plane. The RLC SDU, of which size is adjusted to be fit for a processing capacity in the RLC layer and then to which header information is added so as to form a protocol data unit(hereinafter abbreviated PDU), is transferred to the MAC layer. In this case, an RLC buffer for storing RLC SDUs or RLC PDUs coming down from the upper layer exists in the RLC layer.

The RRC layer provides an information broadcast service for broadcasting information to all user equipments located at random areas. Moreover, the RRC layer takes charge of a control plane signal processing for a control signal exchange in the third layer so to have functions of establishing, maintaining, and releasing a radio resource between the user equipment and UTRAN. Specifically, the RRC layer also has functions of establishing, maintaining, and releasing a radio access bearer as well as allotment, rearrangement and release of a radio resource necessary for a radio resource access. In this case, the radio access bearer means a service provided by the second layer for the data transfer between the user equipment and UTRAN. Namely, 'establishing one radio access bearer' means that characteristics of a protocol layer and a channel required for providing a specific service are stipulated and that the respective specific parameters and operational methods are established.

Detailed explanation of the RLC layer follows. In accordance with the functions carried out by the RLC layer, there exist three kinds of modes such as a transparent mode, an unacknowledged mode, and an acknowledged mode.

First, when the RLC operates at the transparent mode, no header information is added to the RLC SDU coming down from the upper layer. Generally, segmentation and reassembly are not used at the transparent mode. Yet, if necessary, when the radio access bearer is established(configured), it is determined whether the segmentation and reassembly functions are used or not.

Second, when the RLC operates at the unacknowledged mode, retransmission is not backed up even if the transmission of RLC PDU fails. Therefore, a receiving side does not demand the retransmission when data are lost or problems occur during transmission. In stead, the receiving side discards the relating data. Services using the unacknowledged mode are a cell broadcast service, a voice service using an IP network(voice over IP service) and the like.

Lastly, when the RLC operates at the acknowledged mode, the retransmission is backed up when the transmission of a packet fails. Namely, the RLC layer of a transmitting side receives a status information enabling to judge whether the transmission succeeds from the receiving side and then retransmits RLC PDU demanded for retransmission. During the operation at the acknowledged mode, the RLC SDU received by the RLC layer from the upper layer is, if necessary, divided into pre-defined sizes by segmentation/concatenation and then becomes RLC PDUs to which header information including sequence numbers are added. The RLC PDUs are then stored in an RLC buffer according to the sequence numbers. The stored RLC PDUs amounting to the exact number demanded by the MAC layer are transferred to the MAC layer, in which the transmission is basically carried out in accordance with the order of the sequence numbers. From the RLC layer of the transmitting side, a firstly-transmitted RLC PDU is transmitted according to the order of the sequence numbers. Therefore, the RLC layer of the receiving side checks the received sequence numbers so as to demand the RLC layer of the transmitting side for retransmitting the transmission-failed data.

When the RLC SDUs(service data units) having come down to the RLC layer in the radio communication system corresponding to the transmitting side fail to be transmitted to the other radio communication system corresponding to the receiving side, the transmitting side needs to discard the SDUs in order to prevent a transmission buffer from being overloaded.

A function of discarding the SDUs(service data units) is used by the RLC layer, which is embodied in the RRC layer as well.

There are two methods for carrying out the SDU discard function.

The first is a time-based SDU discard method. Namely, the time-based SDU discard method is carried out using a timer. And, the second SDU discard method depends on limiting the number of transmissions. The first one measures the time during which SDU stays, while the second one measures how many times PDU is retransmitted. In this case, the target to be discarded is SDU.

Regarding the time-based SDU discard method, when RLC SDUs come down to the RLC layer from the upper layer of the transmitting side, a discard-timer counting the time during which each RLC SDU stays in the RLC layer is driven.

Subsequently, when the corresponding RLC SDU fails to be transmitted to the receiving side until the set time of the discard-timer expires or an ACK(acknowledgement) signal fails to be received from the receiving side even if the corresponding RLC SDU is transmitted to the receiving side, the radio communication system corresponding to the receiving side discards all of the RLC PDUs including the corresponding SDU.

On the other hand, if an RLC SDU, which is not to be discarded, as well as the RLC SDU to be discarded is included in the same RLC PDU, the transmitting side would not discard the corresponding RLC PDU.

The second SDU discard method depending on limiting the number of transmissions is explained as follows.

The RLC layer of the transmitting side counts the number of transmissions of the respective RLC PDUs toward the receiving side. Namely, a counter VT-DAT counting the transmission number of the respective RLC PDUs is initiated to operate. The counter VT-DAT increases the count value by 1 every time one RLC PDU taken charge of by the counter is transmitted to the receiving side.

The transmission-possible number of a specific RLC PDU is defined as one maximum variable MaxDAT. If the count value of the counter VT-DAT becomes equal to or higher than the maximum variable MaxDAT, SDUs included in the corresponding RLC PDU and all the RLC SDUs having been transmitted before the corresponding RLC PDU are discarded.

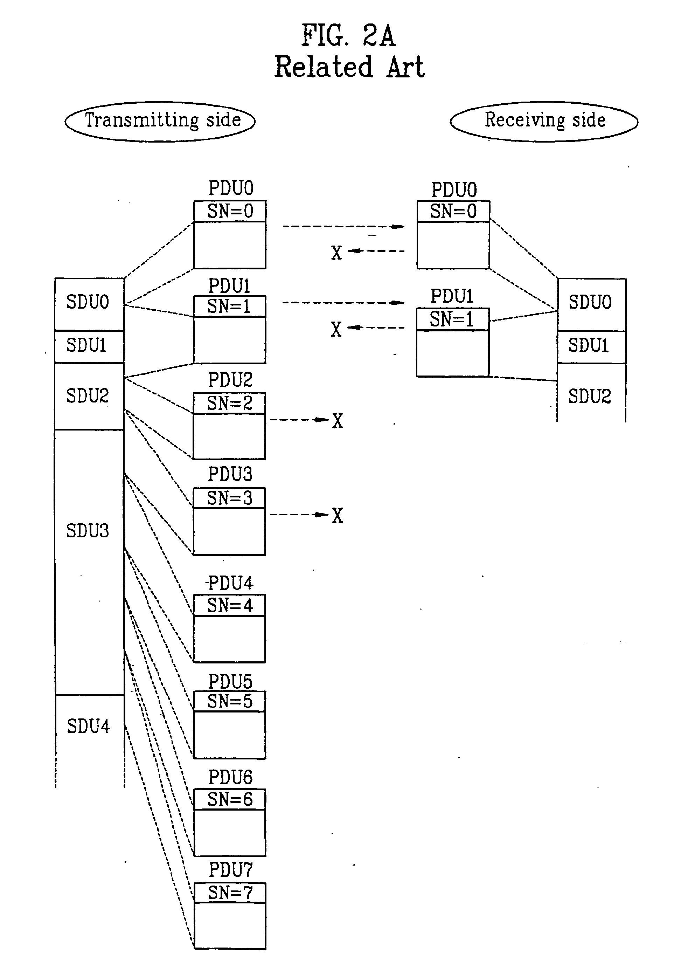

FIG. 2A illustrates a diagram for explaining a method of transmitting discard information of RLC SDUs discarded by the time-based RLC SDU discard method to the receiving side according to a related art.

Referring to FIG. 2A, the RLC layer receives RLC SDU0, RLC SDU1, RLC SDU2, and RLC SDU3 from the upper layer, transforms them into RLC PDU forms, and transmits the RLC PDU forms to the receiving side, successively. In this case, the RLC SDUs are data units stipulated by the upper layer.

The respective SDUs, as shown in FIG. 2A, are loaded on at least one RLC PDU so as to be transmitted to the receiving side.

In FIG. 2A, the SDU0, SDU1, SDU2, and SDU3 include PDU0/PDU1, PDU1, PDU1/PDU2/PDU3, and PDU3 to PDU7, respectively. The sequence numbers SN 0 to 7, as shown in FIG. 2A, are given to the PDUs PDU0 to PDU7 in order, respectively. Thus, the sequence-numbered PDU is transmitted toward the receiving side.

Referring to FIG. 2A, after the previously-set time during which the SDU0 to SDU3 enable to stay in the transmitting side expires, the PDU0 and PDUU1 are transmitted to the receiving side but the PDU2 and PDU3 are lost during the transmission. Meanwhile, the PDU4 to PDU 7 are not transmitted to the receiving side from the transmitting side yet.

As mentioned in the above explanation, once the previously-set time for the SDU0 to SDU3 expires, the transmitting side discards the PDU0 to PDU7 corresponding to the SDU0 to SDU3 in the internal transmission buffer so as to transfer the corresponding discard information, which is loaded on MRW SUFI(move receiving window super field), to the receiving side.

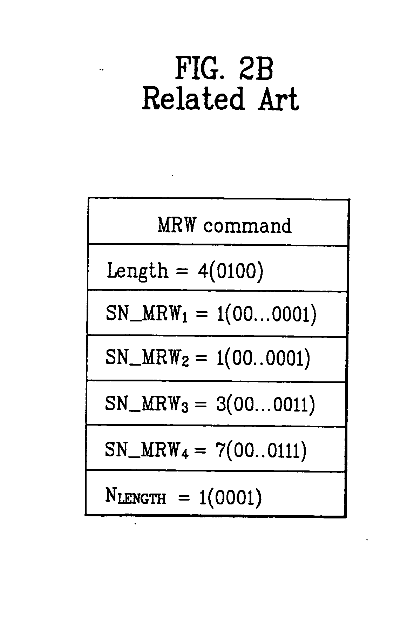

FIG. 2B illustrates formats and parameters of the MRW SUFI which are transmitted in case of FIG. 2A.

Referring to FIG. 2B, a parameter LENGTH is constructed with 4 bits and indicates the number of the discarded SDUs. Other parameters SN_MRW1 to SN_MRW4 indicate sequence numbers of the PDUs respectively. Each of the parameters SN_MRWᵢ(i=1, 2, 3, and 4) represents the sequence number of the corresponding PDU including the end of each of the discarded SDUs. And, each of the parameters SN_MRWᵢ(i=1, 2, 3, and 4) is constructed with 12 bits.

The SN_MRWᵢ comprising 12 bits indicates a sequence number SN of the first PDU in a PDU or PDUs having the data belonging to the SDU next to the ith discarded SDU. Namely, considering every SDU unit, the SN_MRWᵢ(i is a positive integer) is the information commanding that the first PDU having the data of the SDU is to be transmitted right after the discarded SDU.

As shown in FIG. 2B, the parameter LENGTH of the MRW SUFI indicating the number of the discarded SDUs is represented by "0100". Meanwhile, the SN_MRW₁ is represented by "1" which is a sequence number of the PDU1 since an end of the SDU0 belongs to the PDU1. The SN_MRW₂ is represented by "1" which is the sequence number of the PDU1 since an end of the SDU1 belongs to the PDU1. The SN_MRW₃ is represented by "3" which is a sequence number of the PDU3 since an end of the SDU2 belongs to the PDU3. And, the SN_MRW₄ is represented by "7" which is a sequence number of the PDU7 since an end of the SDU3 belongs to the PDU7.

An N_{LENGTH} field comprising 4 bits indicates the data, which defines what SDUs are to be discarded, in the PDU having a sequence number of SN_MRW_{LENGTH}. This means what SDUs are discarded in case that a plurality of SDUs are unable to enter one PDU. For instance, when a value of N_{LENGTH} is set as "0", the PDU having the sequence number of SN_MRW_{LENGTH} shows that there is no data corresponding to the SDU to be discarded. When a value of N_{LENGTH} is set as "2", the data corresponding the second SDU from the front are discarded and the data in the PDU having the sequence number of SN_MRW_{LENGTH} are transmitted/received. In FIG. 2A, N_{LENGTH} is represented by "0001".

The receiving side, which receives the MRW SUFI shown in FIG. 2B as discard information from the transmitting side, discards the PDUs PDU0 to PDU7 corresponding to the SDU0 to SDU3 from a receiver buffer inside and moves the receiving window. Subsequently, the receiving side transfers an acknowledged signal, which commands that MRW_ACK data from the PDU having a sequence number SN of "8" are transmitted to the transmitting side, to the radio communication system corresponding to the transmitting side.

The transmitting side having received the signal from the receiving side confirms that the PDU0 to PDU7 corresponding to the SDU to be discarded are successfully discarded by the receiving side as well, and then starts to transmit the PDU corresponding to the sequence number SN of "8" and so on to the receiving side.

Unfortunately, the related art has the following problems or disadvantages.

When the time set previously by the timer expires or the previously-set number by the counter is over, and all of the SDUs related to the transmission are to be discarded , all the information about the discarded SDUs is transmitted to the receiving side. As mentioned in the above explanation, the sequence number of the corresponding PDU informing the end point of each of the discarded SDUs comprises 12 bits, thereby reducing greatly the transmission efficiency of the transmitting side if the discarded SDUs are excessive. Namely, the transmission of the discard information is to make a next receiving window coincide with a next transmission window . Yet, all the information about the entire discarded SDUs is unnecessarily transmitted to the receiving side even if it is enough to inform the receiving side of the discard information only about the start and end points of a series of the SDUs, of which start and end points are known and which are not transmitted yet, remaining in the internal transmission buffer. Therefore, a radio resource is wasted.

Moreover, if it is assumed that the PDU3 in FIG. 2A has never been transmitted, when the time for which the SDU0 to SDU3 stay in the transmission buffer expires over a predetermined time according to the timer-based discard method of the related art, the RLC layer of the transmitting side discards the SDU0 to SDU3 and transmits such information to the RLC layer. Yet, the information about the SDU3, which has never been tried to transmit so that the receiving side has a zero probability of receiving it, is transmitted to the receiving side, thereby wasting a radio resource as well.
The technical specification ETSI TS 125 322 V3.4.0 (2000-09); Universal Mobile Telecommunications System (UMTS), RLC Protocol Specification (3G TS 25.322 version 3.4.0 Release 1999) discloses an acknowledged mode entity that receives SDUs from an upper or higher layer, and that transforms SDUs by segmenting and/or concatenating to payload units, called PUs of fixed length. The PUs are then included in RLC PDUs for being transmitted to the receiver side.

An SDU discard function is provided for the acknowledged mode that allows to discharge RLC PDUs from the buffer on the transmitter side, when the transmission of the RLC PDU has not been successful for a long time. If an SDU has been discarded, a move receiving window (MRW) command is sent to the receiver so that PDUs carrying that SDU are discarded in the receiver, and the receiver window is updated accordingly. The MRW command is defined as a super-field SUFI in the RLC STATUS PDU. This MRW super-field is used to request the RLC receiver to move its receiving window and to indicate the amount of discarded SDUs as a result of SDU discard in the RLC transmitter. In particular, the transmitter informs the receiver by means of the MRW SUFI about the end of each discarded SDU including the end of the last discarded SDU. Thus, this technical specification discloses transmitting discard information comprising information about each discarded service data unit to the receiving side.

The technical specification ETSI TS 125 322 V3.1.2 (2000-01); Universal Mobile Telecommunications System (UMTS), RLC Protocol Specification (3G TS 25.322 version 3.1.2 Release 1999) is an earlier version of the above technical specification and discloses also an acknowledged mode entity that has a SDU discard function wherein the receiver is informed about discarded SDUs by a super-field MRW command.

According to this former specification the move receiving window super-field includes only information about the end of the last discarded SDU. I.e. a sequence number of a payload unit that contains the first byte of an SDU to be resembled next. Hence, here it is disclosed to transmit discard information comprising information about the last discarded service data unit to the receiving side.

Methods according to the preambles of claims 1 and 14 are known from ALCATEL ET AL: "General clarifications", 3GPP DRAFT; R2-012187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Helsinki, Finland; 20010904, 4 September 2001 (2001-09-04), XP050118951.

### SUMMARY OF THE INVENTION

The object of the present invention is to provide a method and a device for transmitting data in a radio communication system, in particular a method for transmitting data from an RLC layer in a radio communication system enabling to use a radio resource efficiently and to improve the transmission efficiency of the radio communication system.

This object is achieved by the subject matter of claims 1, 14, 25 and 26.

In particular, according to the characterizing portion of claim 1 the discard information includes an entire or a part of information about the discarded at least one service data unit in accordance with whether a transmission mode indicator is configured. In particular, a method of transmitting data from an RLC layer in a radio communication system according to the present invention includes the steps of storing RLC SDUs transferred from an upper layer in a transmission buffer, transmitting RLC PDUs on which the RLC SDUs stored in the transmission buffer are loaded to a receiving side in order, discarding the RLC SDUs stored in the transmission buffer, checking whether a transmission mode indicator is configured, and transmitting discard information about the discarded RLC SDUs to the receiving side entirely or in part in accordance with whether the transmissin_MRW mode indicator is configured.

Preferably, the location information of each of the discarded RLC SDUs is a sequence number of each corresponding RLC PDU to which an end of each of the discarded RLC SDUs as well as a sequence number of RLC PDU from which SDU to be transmitted after each of the discarded RLC SDUs starts.

Preferably, the location information of the last discarded RLC SDU is a sequence number of the corresponding RLC PDU to which an end of the last discarded RLC SDU belongs as well as a sequence number of RLC PDU from which RLC SDU to be transmitted after the last discarded RLC SDU begins.

In another aspect of the present invention, a method of transmitting data of a radio link control layer in a radio communication system includes the steps of storing data units transferred from an upper layer in a transmission buffer, making data units of a radio link control layer on which the data units of an upper layer are loaded, transmitting data units of a radio link control layer to a receiving side in order, checking a failure of the transmission of the data units, sending discard information about all of the discarded data units of an upper layer or sending discard information about part of the discarded data units of an upper layer according to an indicator.

Preferably, the discard information is sent to the receiving side through a message for moving receiving window of the receiving side. And the message includes a parameter indicating a data unit of a radio link control layer which indicates the end of last discarded data unit of an upper layer, and a parameter indicating the status of said data unit of a radio link control layer.

Preferably, the parameter indicating a data unit of a radio link control layer is the sequence number of the data unit of a radio link control layer to which an end of the last discarded data unit of an upper layer belongs or in which the starting point of a data unit of an upper layer to be transmitted after the discard.

Preferably, the parameter indicating the status of the data unit of a radio link control layer is the number of the data units of an upper layer to be neglected by the receiving side in said data unit of a radio link control layer.

Preferably, the message further includes a parameter indicating that the data unit of an upper layer to be discarded in the receiver extends above the configured transmission window in the transmitter.

Preferably, the data unit of a radio link control layer is an RLC PDU and the data unit of an upper layer is an RLC SDU.

When discard information about part of the discarded SDUs is sent, Preferably, the last SDU to be discarded at the receiving side is sent as a part of the discarded SDUs. The discard information includes at least information required for moving a receiving window of the receiving side.

In a further aspect of the present invention, a method includes the steps of sequentially transmitting RLC PDUs corresponding to RLC SDUs and having sequence numbers to a receiving side, discarding corresponding ones of the RLC SDUs when a reference value set previously to discard each of the RLC SDUs is exceeded, checking whether the discarded RLC SDUs are transmitted to the receiving side, renumbering sequence numbers of PDUs belonging to RLC SDUs to be transmitted next so as to be initiated from a sequence number of the first PDU having not been transmitted, checking whether a transmission mode indicator is configured by an upper layer, transmitting discard information about the discarded RLC SDUs to the receiving side entirely when the transmission MRW mode indicator is configured, and transmitting the discard information about the discarded RLC SDUs to the receiving side in part when the transmission MRW mode indicator fails to be configured.

In another further aspect of the present invention, a message for sending discard information of data of a radio link control layer in a radio communication system includes a field indicating the message type, and a field indicating a data unit of a radio link control layer which indicates the end of last discarded data unit of an upper layer of said radio link control layer, and a field indicating the status of said data unit of a radio link control layer.

Preferably, The message further includes a field indicating that the data unit of an upper layer to be discarded in the receiver extends above the configured transmission window in the transmitter.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 illustrates an architectural diagram of a general radio communication system according to a related art;

FIG. 2A illustrates a diagram for explaining a method of transmitting discard information of RLC SDUs discarded by the time-based RLC SDU discard method to the receiving side according to a related art;

FIG. 2B illustrates formats and parameters of the MRW SUFI which are transmitted in case of FIG. 2A;

FIG. 3 illustrates a table of MRW SUFI according to an embodiment of the present invention;

FIG. 4 illustrates a table of MRW SUFI according to another embodiment of the present invention;

Fig. 5 illustrates a diagram of carrying out the discard function using the MRW SUFI shown in FIG. 3;

Fig. 6 illustrates a diagram of carrying out the discard function using the MRW SUFI shown in FIG. 4;

FIG. 7 illustrates a flowchart of operating discard functions of radio communication systems corresponding to transmitting and receiving sides respectively;

FIG. 8 illustrates a diagram of carrying out a discard function for service data units according to a stay time limit in a transmission buffer in a radio communication system according to the present invention; and

FIG. 9 illustrates a flowchart of carrying out a discard function for service data units according to a stay time limit in a transmission buffer in a radio communication system according to the present invention.

### DETAILED DESCRIPTION OF THE PREFERRED EMBODIMENTS

Reference will now be made in detail to the preferred embodiments of the present invention, examples of which are illustrated in the accompanying drawings.

In the present invention, an MRW transmission set indicator for SDU discard information is previously configured when an RLC layer is produced by an upper layer to establish a radio bearer.

If the configured MRW mode set indicator is configured, for example, if a sequence number mode of a PDCP layer is set, PDCP layers of transmission and receiving sides reconcile the sequence numbers of PDCP PDUs, i.e. RLC SDUs. Therefore, the MRW mode set indicator should be configured. Thus, if the configured MRW mode set indicator is established, the RLC layer of the transmitting side transmits all the discard information about the discarded SDUs to the other RLC layer of the other radio communication system corresponding to the receiving side.

In this case, the discard information includes a sequence number of PDU belonging to each end of the discarded SDUs. In detail, the discard information includes a field indicating the sequence number of the RLC PDU at an initiating position of the SDU next to each of the discarded SDUs. If two SDUs are overlapped with one PDU and the former SDU is discarded, the sequence number of the PDU indicates an end of the discarded SDU. If a border between two SDUs coincides with that of two PDUs and the former SDU is discarded, the sequence number of the second PDU indicates an end of the discarded SDU.

Meanwhile, if the MRW mode indicator is not configured when the RLC layer is produced, for instance, if a sequence number mode of the PDCP layer is not set, the radio communication system corresponding to the transmitting side transmits the discard information about the discarded SDUs to the receiving side entirely or in part. Of course, it is able to transmit all of the discard information to the receiving side.

In this case, a portion of the discard information, which is required for moving a receiving window of the receiving side, indicates location information of the last discarded SDU. Specifically, the portion of the discard information indicates a sequence number of the PDU belonging to an end of the last discarded SDU.

Meanwhile, the discarded information about the discarded SDUs, as mentioned in the above explanation, may be included in the MRW SUFI.

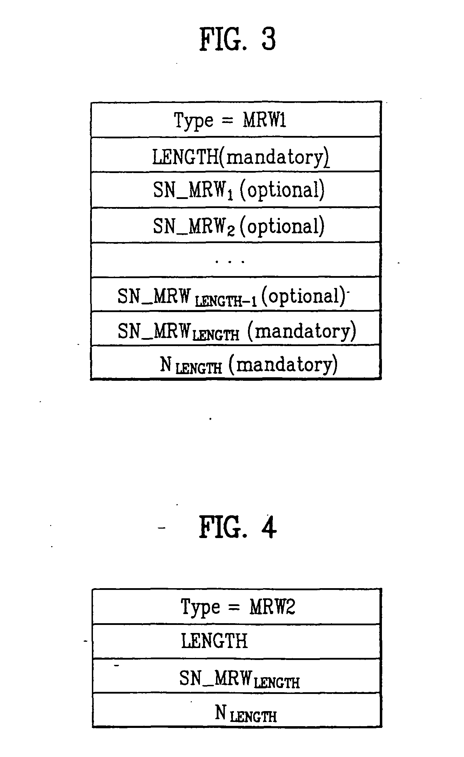

The MRW SUFI is constructed like FIG. 3 so as to transmit the entire discard information of the discarded SDUs to the receiving side. FIG. 3 illustrates a table of MRW SUFI according to an embodiment of the present invention.

Referring to FIG. 3, the MRW SUFI includes all the parameters representing sequence numbers of all PDUs belonging to ends of the discarded SDUs.

On the other hand, the MRW SUFI may be constructed like FIG. 4 so as to transmit a portion of the discard information of the discarded SDUs to the receiving side. FIG. 4 illustrates a table of MRW SUFI according to another embodiment of the present invention.

Referring to FIG. 4, the MRW SUFI includes one parameter representing a sequence number of the PDU belonging to the last discarded one of the discarded SDUs.

Meanwhile, a portion of the discard information of the discarded SDUs may be represented using the entire parameters like FIG. 3.

First, if the MRW mode set indicator is configured for the RLC layer, as mentioned in the above description, the discard information of the entire SDUs discarded in the transmitting side should be transmitted to the receiving side.

Therefore, as shown in FIG. 3, the MRW SUFI includes all the parameters LENGTH, SN_MRW₁, SN_MRW₂, ..., SN_MRW_{LENGTH-1}, SN_MRW_{LENGTH}, and N_{LENGTH}.

The parameter LENGTH comprising 4 bits indicates the number of the discarded SDUs. The parameters SN_MRW₁, SN_MRW₂, ..., SN_MRW_{LENGTH-1}, and SN_MRW_{LENGTH} represent sequence numbers of PDUs belonging to ends of the discarded SDUs. Each parameter SN_MRWᵢ comprises 12 bits.

The parameter N_{LENGTH} indicates what SDUs so far correspond sequentially to the last discarded SDU having the PDU belonging to(or representing) an end of the last discarded SDU.

The parameter LENGTH, if the number of the discarded SDUs is four, is represented by 4 bits of "0100". Meanwhile, each SN_MRWᵢ(i = 1, 2, ..., LENGTH-1, LENGTH) indicates a sequence number of each PDU belonging to an end of each of the discarded SDUs. For example, if the SDU next to the second discarded SDU starts from the second PDU having a sequence number of "2", the parameter SN_MRW₂ is represented by the sequence number of "2". In this case, the parameter for the location information of the discarded SDU is represented by the sequence number of the PDU from which the next SDU starts.

On the other hand, if the MRW mode set indicator is not configured for the RLC layer, as mentioned in the above description, the radio communication system corresponding to the transmitting side just informs the receiving side of the discard information required for moving a window of the receiving side.

In this case, the radio communication system corresponding to the transmitting side loads the location information of the last one of the discarded SDUs on the MRW SUFI.

Therefore, FIG. 4 includes the parameter SN_MRW_{LENGTH} representing the sequence number of the PDU which belongs to(indicates) an end of the last discarded SDU and another parameter N_{LENGTH} indicating the last discarded SDU corresponds sequentially to the SDU in the indicated PDU. The parameter N_{LENGTH} represents the number of SDU(s) to be ignored in the indicated PDU.

In FIG. 4, the parameter LENGTH of the MRW SUFI represents the transmitted information of the last discarded SDU. And, the radio communication system, which corresponds to the transmitting side, checks whether the last discarded SDU exceeds a capacity of the transmission window. In this case, the parameter LENGTH, which is different from that in FIG. 3, indicates the check result. Besides, such a field may not be used.

When the SDU, which is discarded lastly and of which discard information is transmitted, is located in the transmission window, the radio communication system sets the parameter LENGTH as "0001". And, when the last transmitted SDU exceeds or is out of the range of the transmission window, the field of the parameter LENGTH is set as "0000".

As mentioned in the foregoing description, when the discard information of the transmitting side is transmitted to the receiving side, the radio system corresponding to the transmitting side transmits the information of the discarded SDUs entirely or in part to the receiving side according to whether the transmission MRW mode set indicator is configured for(to) its RLC layer by the RRC layer.

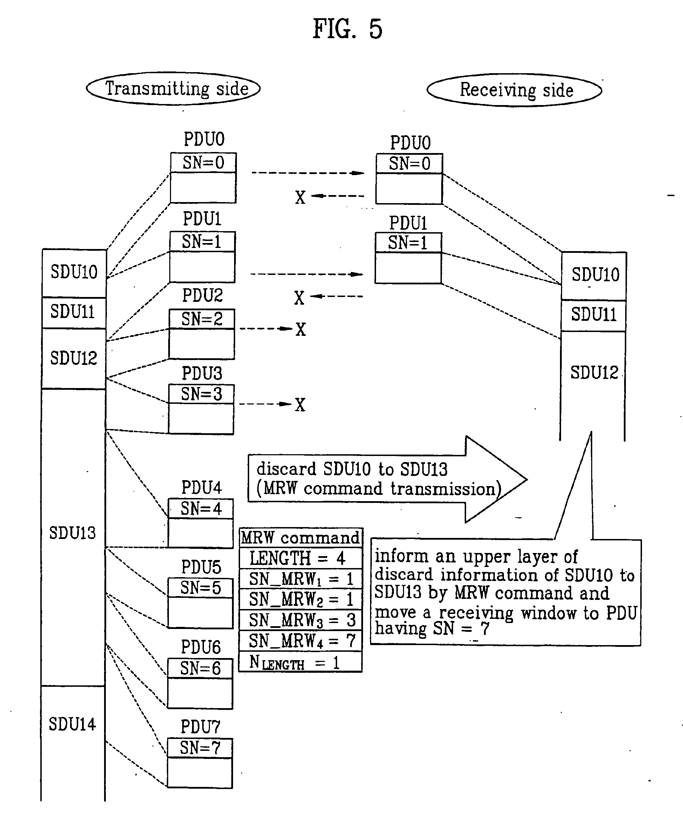

Fig. 5 illustrates a diagram of carrying out the discard function using a message structure of the MRW SUFI shown in FIG. 3.

Referring to FIG. 5, parameters included in the MRW SUFI are explained when the RLC SDUs are discarded.

It is assumed that the RLC SDUs coming down to the RLC layer of the transmitting side are being transmitted to the receiving side. In this case, the SDU10 to SDU13 may be discarded if the transmission time set previously in the timer for the SDU10 to SDU13 expires or if the number of transmission set previously is limited.

For instance, if the SDU10 to SDU13 having been transmitted to the receiving side are lost during the transmission or if failing to receive a positive acknowledgement from the receiving side, the transmitting side discards the SDU10 to SDU13 and then transmits the discarded information loaded on the MRW SUFI to the receiving side.

The MRW SUFI including the location information of each of the discarded SDUs. Thus, the MRW SUFI n FIG. 3 includes the location information of four RLC SDUs corresponding to the SDU10 to SDU13. Hence, a value of the parameter LENGTH, as shown in FIG. 5, becomes "4". And, values of the four parameters SN_MRW₁ to SN_MRW₄ representing the sequence numbers of the PDUs which belong to or indicate ends of the respective discarded SDUs are "1", "1", "3", and "7", respectively.

Meanwhile, the last parameter SN_MRW₄ indicates the PDU7, which means the end of the discarded SDU13. Besides, the last parameter SN_MRW₄ directs a start of the following SDU14 and means that the PDU7 has a priority to be transmitted when the transmission is reinitiated thereafter. Only the SDU13 is the first discarded SDU in the PDU7 belonging to or indicating the end of the last discarded SDU13. Hence, a value of the parameter N_{LENGTH} is "1". This commands that the first SDU of the PDU7 transmitted from the receiving side is ignored and that the second SDU should be received.

In the mean time, as shown in FIG. 5, the receiving side having received the MRW SUFI transmits a response signal MRW_ACK SUFI for the MRW SUFI to the transmitting side and discards the corresponding RLC SDUs according to the contents included in the MRW SUFI. The receiving side then moves the receiving window to the location of the last discarded SDU. In FIG. 5, the receiving side moves the receiving window to the PDU having the sequence number "7".

Besides, the receiving side transfers the discard information of the RLC SDUs discarded by the transmitting side to an upper layer.

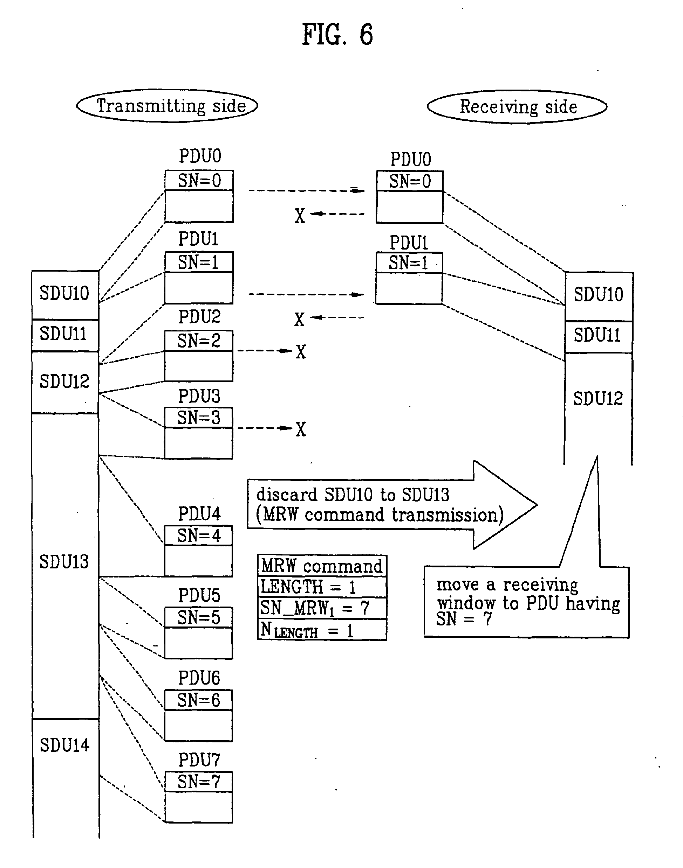

Fig. 6 illustrates a diagram of carrying out the discard function using the MRW SUFI shown in FIG. 4.

Fig. 6 is frequently used when the transmission MRW mode indicator is not configured by the RRC. In FIG. 6, the SDU10 to SDU13 are discarded by the expiration of the previously-set time of the timer or the limitation of the transmission number.

As mentioned in the foregoing description, when the transmission MRW mode indicator is not configured, it is unnecessary to transmit the entire discard information of all of the discarded SDUs to the receiving side. As explained in FIG. 4, it is necessary to inform the receiving side of the location information of the last discarded one of the discarded SDUs.

Therefore, the MRW SUFI includes the location information of the last discarded SDU13, which fails to exceed the transmission window. Thus, a value of the parameter LENGTH in FIG. 6 becomes "1". Moreover, as shown in FIG. 6, the RLC PDU belonging to or indicating the end of the last discarded SDU13 is PDU7 and the SDU 13 is the first one discarded from the PDU7. Therefore, a value of the parameter SN_MRW₁ is "7", and a value of the parameter N_{LENGTH} becomes "1".

Meanwhile, the receiving side having received the MRW SUFI discards PDUs PDU0 to PDU6 having sequence numbers equal to or lower than "7" of the parameter SN_MRW included in the MRW SUFI. If receiving PDU7, the receiving side discards the PDU7 as well. The receiving side then moves the receiving window to the PDU7 having the sequence number of "7".

Besides, the receiving side, at which the transmission MRW mode indicator is not configured, does not send the discard information about the discarded SDU10 to SDU13 up to the upper layer. In this case, the sequence numbers, if existing, of PDCP PDUs(corresponding to the RLC SDUs) fail to coincide with each other.

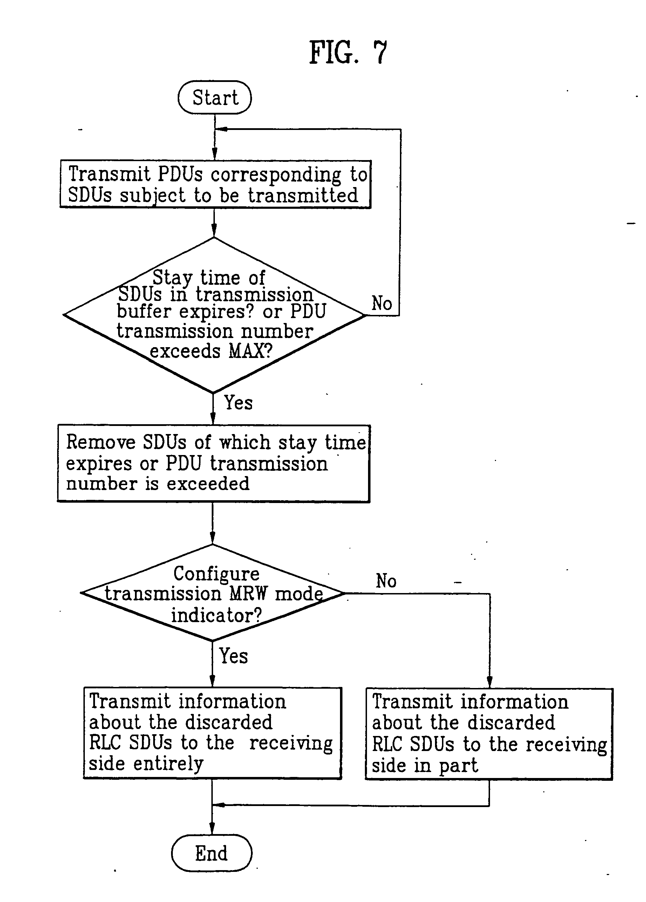

FIG. 7 illustrates a flowchart of operating discard functions of radio communication systems corresponding to transmitting and receiving sides respectively.

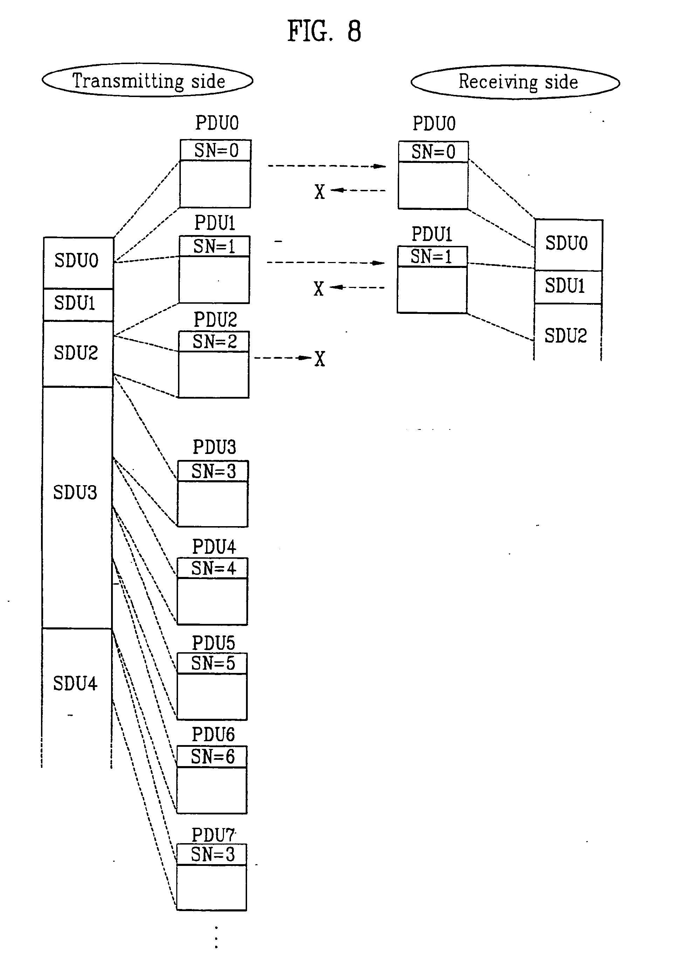

FIG. 8 illustrates a diagram of carrying out a discard function for service data units according to a transmission time set in a timer and a limited transmission number in a radio communication system according to the present invention.

Operation corresponding to the discard function of radio communication systems corresponding to the transmitting and receiving sides is explained in detail as follows by referring to FIG. 7 and FIG. 8.

First, the time-based service data units RLC SDU0 to RLC SDU4 are transmitted as PDU forms such as PDU0 to PDU7 successively from the radio communication system of the transmitting side to that of the receiving side.

While the respective protocol data units PDU0 to PDU7 corresponding to the respective service data units SDU0 to SDU4 as well as their sequence numbers SN=0 to SN=7 are transmitted to the receiving side, the transmitting side checks whether the previously-set transmission time of the RLC service data units RLC SDU0 to RLC SDU3 expires or whether the previously-set transmission number exceeds the limit.

If the previously-set transmission time of the RLC service data units RLC SDU0 to RLC SDU4 fails to expire or the previously-set transmission number fails to exceed the limit, the transmitting side transmits the RLC SDU0 to RLC SDU4 to the receiving side repeatedly. In this case, the transmitting side checks whether the respective RLC SDU0 to RLC SDU4 are transmitted to the receiving side by means of confirming the reception of the transmitted PDU.

If the confirmation is not made until the previously-set transmission time of the RLC service data units RLC SDU0 to RLC SDU4 expires or the previously-set transmission number exceeds the limit, the transmitting side judges that the respective RLC SDU0 to RLC SDU4 fail to be transmitted to the receiving side.

If the RLC SDU0 to SDU4 are transmitted to the receiving side, the transmitting side checks whether the transmission MRW mode indicator is configured for/to the RLC layer. If it is judged that the respective RLC SDU0 to RLC SDU4 fail to be transmitted to the receiving side, the transmitting side discards the transmitted respective RLC SDUs. If the transmission MRW mode indicator is configured, the transmitting side discards the transmitted respective RLC SDUs, transmits the entire discard information about the discarded respective SDUs to the receiving side, and transmits PDU information corresponding to the SDU to be transmitted thereafter.

If the transmission MRW mode indicator is not configured, the transmitting side transmits a portion of the discard information to the receiving side. In this case, it is a matter of course that the entire discard information for the respective discarded SDUs may be transmitted to the receiving side. Skipped is the explanation, which is already done in the above description, of the discard information and the MRW SUFI on which the discard information is loaded.

FIG. 8 illustrates a diagram of carrying out a discard function for service data units according to a stay time limit in a transmission buffer in a radio communication system according to the present invention.

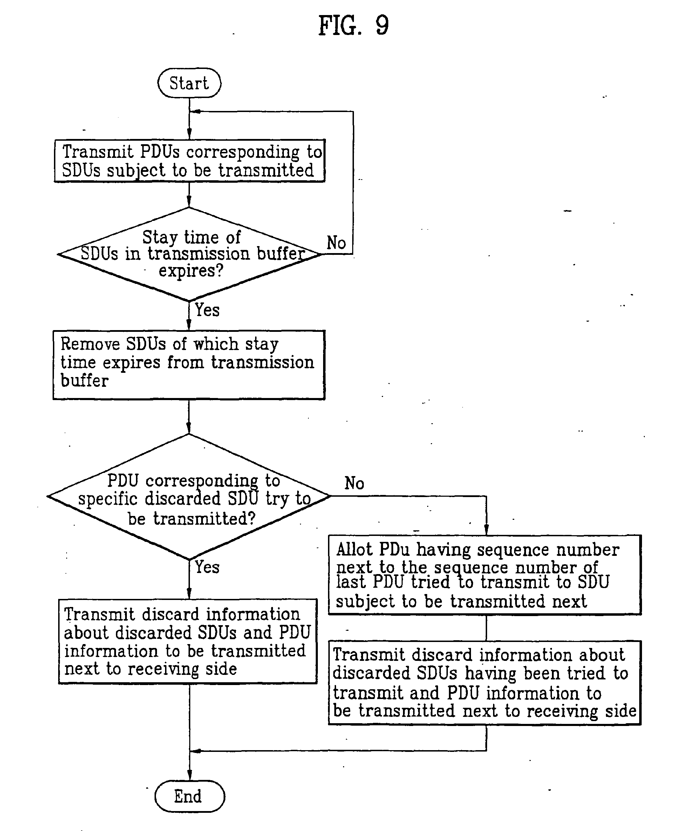

FIG. 9 illustrates a flowchart of carrying out a discard function for service data units according to a stay time limit in a transmission buffer in a radio communication system according to the present invention.

If the previously-set transmission time of the respective RLC service data units RLC SDU0 to RLC SDU4 expires or the previously-set transmission number exceeds the limit and if at least portions of the respective RLC SDU0 to RLC SDU4 fail to be transmitted to the receiving side, the transmitting side numbering sequentially the sequence numbers of the PDUs corresponding to the SDUs to be transmitted subsequently thereafter from the sequence number of the presently-not-transmitted PDU.

Then, carried out is a process of checking whether the transmission MRW mode indicator is configured or not. The detailed explanation, which is already explained in the above description, of the following process is skipped.

Meanwhile, if the receiving side requests a transmission demand when the discard information has been transmitted to the receiving side entirely or in part, the transmitting side transmits again the numbered RLC PDUs to the receiving side in order.

Explained in the following is a process of renumbering the sequence numbers of the PDUs in accordance with whether the respective RLC SDUs are tried to transmit.

An example of applying the time-based discard method thereto is shown in Fig. 8.

First, the RLC layer of the radio communication system corresponding to the transmitting side transmits RLC SDU0 to RLC SDU4, which are received from an upper layer, to the receiving side.

In this case, the transmitting side transmits PDUs corresponding to the RLC SDU0 to RLC SDU4 to the receiving side. As shown in FIG. 8, the RLC SDU0 is transmitted to the receiving side through the RLC PDU0 and RLC PDU1. The RLC SDU1 is transmitted to the receiving side through RLC PDU1. The RLC SDU2 is transmitted to the receiving side through RLC PDU1, RLC PDU2, and RLC PDU3. And, the RLC SDU3 is transmitted to the receiving side through RLC PDU3 to RLC PDU6. The RLC PDUs have their sequence numbers SN=0, SN=1, SN=3, SN=4, SN=5, and SN=6 in order.

Referring to FIG. 8, even though the transmitting side has transmitted the RLC PDU0 to RLC PDU2 corresponding to the RLC SDU0 to RLC SDU2 respectively, the RLC PDU0 and RLC PDU1 are received by the receiving side but acknowledgement signals ACK having been transmitted from the receiving side are lost. (In fact, the transmitting side is unable to know whether the receiving side fails to receive or the transmitting side fails to receive a receiving confirmation signal.)

Meanwhile, the RLC PDU2 is lost during the transmission from the transmitting side to the receiving side, and, the RLC PDU3 to RLC PDU6 are not transmitted yet. In this case, the transmitting side is unable to know that the receiving side fail to receive the RLC PDU2 lost during the transmission or that the transmitting side itself fails to receive the receiving confirmation signal. Yet, the RLC PDU3 has never been transmitted. Thus, the transmitting side surely confirms that the receiving side fails reception.

In this case, if the buffer stay transmission time, which is set previously by the timer, of the RLC SDU0 to RLC SDU3 exceeds the time limit, the radio communication system corresponding to the transmitting side discards the transmitted RLC PDU0 to RLC PDU2 and the RLC SDU3 corresponding to the RLC PDU3 to RLC PDU6 as well as the RLC SDU0 to RLC SDU2 corresponding to the RLC PDU0 to RLC PDU2 which are stored in the transmission buffer and have tried to be transmitted.

Meanwhile, the radio communication system corresponding to the transmitting side checks which SDUs of the discarded RLC SDUs have tried to be transmitted so far and finds a sequence number of the first RLC PDU to which data of the discarded RLC SDU belongs. In FIG. 8, the sequence number SN of the first RLC PDU, to which data of the discarded RLC SDU belongs and which has never been transmitted, is "3". Besides, the transmitting side, as explained in the above description, transmits the discard information of the discarded RLC SDUs to the receiving side using the MRW SUFI. In this case, the discard information includes PDU information relating to SDU to be transmitted next time.

The transmitting side renumbers the sequence numbers of PDU(s) corresponding to RLC SDU4, which is to be transmitted later, from the sequence number SN=3 of the never-transmitted and discarded PDU3. And, an initial point of the SDU becomes equal to that of the PDU.

Therefore, as shown in FIG. 8, the sequence number SN of PDU7 corresponding to RLC SDU4 to be transmitted after the RLC SDU3 is changed into "3" instead of "7". Hereafter, the following process of confirming that the transmission MRW SUFI is configured is the same as shown in FIG. 7.

Meanwhile, the radio communication system corresponding to the receiving side receives the discard information and then discards the RLC PDU0 to RLC PDU6 corresponding to the RLC SDU0 to RLC SDU3.

Subsequently, the receiving side transmits a demand signal, which commands that RLC PDU having a sequence number of "3" is transmitted from the transmitting side in the first place, to the transmitting side.

Meanwhile, the transmitting side transmits the next RLC SDU4 with the RLC PDU7 having the sequence number SN=3 to the receiving side. Besides, sequence numbers of RLC PDUs after the RLC PDU7 are renumbered consecutively from a number right after the sequence number SN=3. Moreover, the RLC PDUs having the renumbered sequence numbers are transmitted from the transmitting side to the receiving side in response to the demand signal.

A flowchart for the above processing is shown in FIG. 9.

The RLC layer of the transmitting side makes PDUs corresponding to SDUs, which are to be transmitted, be transmitted to the receiving side. In this case, the success/failure of reception is constantly checked. The time limit is imposed on SDUs staying in the transmission buffer without confirming the success/failure of reception. If this time limit expires, the corresponding SDUs are discarded and the retransmission is terminated. Besides, Information about the discarded SDU(s) is transmitted to the receiving side. And, it is checked whether PDU having data of a specific SDU is ever transmitted to the receiving side. Hence, a sequence number of the PDU corresponding to the SDU having never tried to be transmitted is used for a sequence number of another PDU corresponding to new SDU. Moreover, the receiving side has no information about the SDU, whereby the discard information is not transmitted either. Yet, as mentioned in the foregoing embodiment, it is unable to do so when sequence numbers are used in the PDCP layer. Therefore, the embodiment according to the present invention is applicable when the transmission MRW mode indicator is not configured.

In the radio communication system corresponding to the transmitting side according to the embodiment of the present invention, the discard information about the RLC SDUs discarded in the RLC layer is transmitted entirely or in part to the RLC layer of the receiving side variably in accordance with the configuration of the transmission MRW mode indicator. Therefore, the present invention enables to carry out the discard function of the SDU with a control signal having a less amount and further reduce the load of the transmitting side.

Moreover, in the embodiment according to the present invention, the sequence numbers of the RLC PDUs are renumbered in accordance with success/failure of the transmission of the RLC PDUs corresponding to the very RLC SDUs. When the transmitting side sends the discard information to the receiving side, bit amounts used for informing the discard information about the discarded service data units are used in part. Namely, the required discard information is transmitted to the receiving side only, thereby enabling to reduce the signal amount required for the transmission. Therefore, a limited radio resource is used efficiently.

The forgoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A method of transmitting data from an RLC layer operating in an acknowledged mode in a radio communication system, comprising the steps of:
- storing service data units SDUs received from an upper layer in a transmission buffer;
- transforming the service data units from the upper layer into protocol data units PDUs to be transmitted to a receiving side;
- discarding at least one service data unit; and
- transmitting discard information of the discarded at least one service data unit to the receiving side;
**characterized by**
- checking whether an MRW transmission set indicator is configured; and
- if the MRW transmission set indicator is configured, transmitting entire discard information about each discarded service data unit; or
- if the MRW transmission set indicator is not configured, transmitting discard information about the last service data unit having been tried to be transmitted among the discarded at least one service data unit.

2. The method of claim 1, wherein the discard information about the discarded at least one service data unit corresponds to a moving position information of a receiving window of the receiving side.

3. The method of claim 1, wherein the at least one service data unit is discarded if a condition is satisfied.

4. The method of claim 3, wherein the condition is satisfied when the at least one service data unit fails to be transmitted to the receiving side until a predetermined period of time is elapsed after receiving the at least one service data unit from the upper layer.

5. The method of claim 3, wherein the condition is satisfied when an acknowledge signal, called ACK signal, fails to be received from the receiving side even though protocol data unit corresponding to the at least one service dat unit is transmitted a predetermined number of times.

6. The method of claim 1, wherein the discard information of the service data unit is loaded to a window moving indicator to be transmitted to the receiving side.

7. The method of claim 6, wherein the window moving indicator is a receiving window moving super field MRW SUFI.

8. The method of claim 7, wherein the receiving window moving super field comprises a LENGTH field indicating whether or not a last transmitted service data unit of the discarded at least one service data unit exceeds a range of the transmission window, a SN_MRW_{LENGTH} field indicating a sequence number of a last protocol data unit including the last transmitted service data unit, and a N_{LENGTH} field indicating a specific order of the last transmitted service data unit in the last protocol data unit having the sequence number.

9. The method of claim 1, wherein, when the MRW transmission set indicator is configured, the information about each discarded service data unit indicates the end of each discarded service data unit.

10. The method of claim 9, wherein the information about each discarded service data unit is a sequence number of a protocol data unit to which the end of each discarded service data unit belongs.

11. The method of claim 1, wherein, when the MRW transmission set indicator is not configured, the discard information about the discarded at least one service data unit indicates the end of the last service data unit having been tried to be transmitted among the discorded at least one service data unit.

12. The method of claim 11, wherein the discord information is a sequence number of a protocol data unit to which the end of the last service data unit having been tried to be transmitted among the discorded at lest one service data unit belongs.

13. The method of claim 8, wherein the LENGTH field is set as "0000" when the last transmitted service data unit of the discarded at least one service data unit exceeds a range of the transmission window.

14. A method of receiving data in an RLC layer operating in an acknowledged mode in a radio communication system, comprising the steps of:
- receiving discard information of at least one service data unit discarded in a transmission buffer in a transmission side; and
- moving a position of the receiving window according to the received discard information;
**characterized in that**
- the discard information includes
-- entire information about each discarded service data unit, if a MRW transmission set indicator is configured at the transmission side; or
-- information about the last service data unit having been tried to be transmitted among the discarded at least one service data unit, if the MRW transmission set indicator is not configured, at the transmission side.

15. The method of claim 14, wherein the information about the discarded at least one service data unit corresponds to a moving position information for the receiving window.

16. The method of claim 15, wherein the moving position information for the receiving window is received at the radio link control layer through a field of a status protocol data unit which transmits control information.

17. The method of claim 16, wherein the field of the status protocol data unit is a receiving window moving super field.

18. The method of claim 17, wherein the receiving window moving super field comprises a LENGTH field indicating whether or not a last transmitted service data unit of the discarded at least one service data unit exceeds a range of the transmission window.

19. The method of claim 18, wherein the receiving window moving super field further comprises a SN_MRW_{LENGTH} field indicating a sequence number of a last protocol data unit including the last transmitted service data unit, and a N_{LENGTH} field indicating a specific order of the last transmitted service data unit in the last protocol data unit having the sequence number.

20. The method of claim 14, wherein, when the MRW transmission set indicator is configured, the information about each discarded service data unit indicates the end of each discarded service data unit.

21. The method of claim 20, wherein the information about each discarded service data unit is a sequence number of a protocol data unit protocol data unit to which the end of each discarded service data unit belongs.

22. The method of claim 14, wherein, when the MRW transmission set indicator is not configured, the discard information about the discarded at least one service data unit service data unit indicates the end of the last service data unit, having been tried to be transmitted among the discorded at least one service data unit.

23. The method of claim 22, wherein the discard information is a sequence number of a protocol data unit to which the end of the last service data unit having been tried to be transmitted among the discorded at least one service data unit belongs.

24. The method of claim 18, wherein the LENGTH field is set as "0000" when the last transmitted service data unit of the discarded at least one service data unit exceeds a range of the transmission window.

25. A transmitter for use in a radio communication system, the transmitter being adapted to carry out a method in accordance with any one of claims 1 to 13.

26. A receiver for use in a radio communication system, the receiver being adapted to carry out a method in accordance with any one of claims 14 to 24.

## Patentansprüche

1. Verfahren zum Senden von Daten von einer RLC-Schicht, die in einer Quittungs-Betriebsart arbeitet, in einem Funkkommunikationssystem, das die Schritte umfasst:
- Speichern von Dienstdateneinheiten SDUs, die von einer höheren Schicht empfangen werden, in einem Sendepuffer;
- Umformen der Dienstdateneinheiten von der oberen Schicht in Protokolldateneinheiten, PDUs, die zu einer Empfangsseite gesendet werden sollen;
- Zurückweisen wenigstens einer Dienstdateneinheit; und
- Senden der Zurückweisungsinformationen der zurückgewiesenen wenigstens einen Dienstdateneinheit zu der Empfangsseite;
**gekennzeichnet durch**
- Überprüfen, ob ein MRW-Sendeeinstellungskennzeichen konfiguriert ist; und
- wenn das MRW-Sendeeinstellungskennzeichen konfiguriert ist, Senden der vollständigen Zurückweisungsinformationen über jede zurückgewiesene Dienstdateneinheit; oder
- wenn das MRW-Sendeeinstellungskennzeichen nicht konfiguriert ist, Senden der Zurückweisungsinformationen über jene letzte Dienstdateneinheit der zurückgewiesenen wenigstens einen Dienstdateneinheit, von der versucht wurde, sie zu senden.

2. Verfahren nach Anspruch 1, wobei die Zurückweisungsinformationen über die zurückgewiesene wenigstens eine Dienstdateneinheit den Bewegungspositionsinformationen eines Empfangsfensters der Empfangsseite entspricht.

3. Verfahren nach Anspruch 1, wobei die wenigstens eine Dienstdateneinheit zurückgewiesen wird, wenn eine Bedingung erfüllt ist.

4. Verfahren nach Anspruch 3, wobei die Bedingung erfüllt ist, wenn die wenigstens eine Dienstdateneinheit nicht zur Empfangsseite gesendet werden kann, bis eine vorgegebene Zeitdauer nach dem Empfangen der wenigstens einen Dienstdateneinheit von der höheren Schicht abgelaufen ist.

5. Verfahren nach Anspruch 3, wobei die Bedingung erfüllt ist, wenn ein Quittungssignal, das als ACK-Signal bezeichnet wird, nicht von der Empfangsseite empfangen werden kann, obwohl eine Protokolldateneinheit, die der wenigstens einen Dienstdateneinheit entspricht, in einer vorgegebenen Anzahl von Malen gesendet wurde.

6. Verfahren nach Anspruch 1, wobei die Zurückweisungsinformationen der Dienstdateneinheit in ein Fensterbewegungskennzeichen geladen werden, um zur Empfangsseite gesendet zu werden.

7. Verfahren nach Anspruch 6, wobei das Fensterbewegungskennzeichen ein Empfangsfensterbewegungssuperfeld, MRW SUFI, ist.

8. Verfahren nach Anspruch 7, wobei das Empfangsfensterbewegungssuperfeld ein LENGTH-Feld, das anzeigt, ob ein eine zuletzt gesendete Dienstdateneinheit der zurückgewiesenen wenigstens einen Dienstdateneinheit einen Bereich des Sendefensters überschreitet oder nicht, ein SN_MRW_{LENGTH}-Feld, das eine Folgenummer einer letzten Protokolldateneinheit, die die letzte gesendete Dienstdateneinheit umfasst, anzeigt, und ein N_{LENGTH}-Feld, das eine spezielle Reihenfolge der letzten gesendeten Dienstdateneinheit in der letzten Protokolldateneinheit, die die Folgenummer aufweist, anzeigt, umfasst.

9. Verfahren nach Anspruch 1, wobei dann, wenn das MRW-Sendeeinstellungskennzeichen konfiguriert ist, die Informationen über jede zurückgewiesene Dienstdateneinheit das Ende jeder zurückgewiesenen Dienstdateneinheit anzeigen.

10. Verfahren nach Anspruch 9, wobei die Informationen über jede zurückgewiesene Dienstdateneinheit eine Folgenummer einer Protokolldateneinheit ist, zu der das Ende jeder zurückgewiesenen Dienstdateneinheit gehört.

11. Verfahren nach Anspruch 1, wobei dann, wenn das MRW-Sendeeinstellungskennzeichen nicht konfiguriert ist, die Zurückweisungsinformationen über die zurückgewiesene wenigstens eine Dienstdateneinheit das Ende jener letzten Dienstdateneinheit der zurückgewiesenen wenigstens einen Dienstdateneinheit anzeigt, von der versucht wurde, sie zu senden.

12. Verfahren nach Anspruch 11, wobei die Zurückweisungsinformationen eine Folgenummer einer Protokolldateneinheit sind, zu der das Ende jener letzten Dienstdateneinheit der zurückgewiesenen wenigstens einen Dienstdateneinheit, von der versucht wurde, sie zu senden, gehört.

13. Verfahren nach Anspruch 8, wobei das LENGTH-Feld auf "0000" gesetzt ist, wenn die letzte gesendete Dienstdateneinheit der zurückgewiesenen wenigstens einen Dienstdateneinheit einen Bereich des Sendefensters überschreitet.

14. Verfahren zum Empfangen von Daten in einer RLC-Schicht, die in einer Quittungs-Betriebsart arbeitet, in einem Funkkommunikationssystem, das die Schritte umfasst:
- Empfangen von Zurückweisungsinformationen wenigstens einer Dienstdateneinheit, die in einem Sendepuffer in einer Sendeseite zurückgewiesen wurde; und
- Bewegen einer Position des Empfangsfensters gemäß den empfangenen Zurückweisungsinformationen;
**dadurch gekennzeichnet, dass**
- die Zurückweisungsinformationen umfassen:
-- die vollständigen Informationen über jede zurückgewiesene Dienstdateneinheit, wenn ein MRW Sendeeinstellungskennzeichen auf der Sendeseite konfiguriert ist; oder
-- Informationen über jene letzte Dienstdateneinheit der zurückgewiesenen wenigstens einen Dienstdateneinheit, von der versucht wurde, sie zu senden, wenn das MRW-Sendeeinstellungskennzeichen auf der Sendeseite nicht konfiguriert ist.

15. Verfahren nach Anspruch 14, wobei die Zurückweisungsinformationen über die zurückgewiesene wenigstens eine Dienstdateneinheit den Bewegungspositionsinformationen für das Empfangsfenster entspricht.

16. Verfahren nach Anspruch 15, wobei die Bewegungspositionsinformationen für das Empfangsfenster an der Funkverbindungssteuerschicht durch ein Feld einer Statusprotokolldateneinheit, die Steuerinformationen überträgt, empfangen wird.

17. Verfahren nach Anspruch 16, wobei das Feld der Statusprotokolldateneinheit ein Empfangsfensterbewegungssuperfeld ist.

18. Verfahren nach Anspruch 17, wobei das Empfangsfensterbewegungssuperfeld ein LENGTH-Feld umfasst, das anzeigt, ob eine letzte gesendete Dienstdateneinheit der zurückgewiesenen wenigstens einen Dienstdateneinheit einen Bereich des Sendefensters überschreitet oder nicht.

19. Verfahren nach Anspruch 18, wobei das Empfangsfensterbewegungssuperfeld ferner ein SN_MRW_{LENGTH}-Feld, das eine Folgenummer einer letzten Protokolldateneinheit, die die letzte gesendete Dienstdateneinheit umfasst, und ein N_{LENGTH}-Feld, das eine spezielle Reihenfolge der letzten gesendeten Dienstdateneinheit in der letzten Protokolldateneinheit anzeigt, die die Folgenummer aufweist, umfasst.

20. Verfahren nach Anspruch 14, wobei dann, wenn das MRW-Sendeeinstellungskennzeichen konfiguriert ist, die Informationen über jede zurückgewiesene Dienstdateneinheit das Ende jeder zurückgewiesenen Dienstdateneinheit anzeigen.

21. Verfahren nach Anspruch 20, wobei die Informationen über jede zurückgewiesene Dienstdateneinheit eine Folgenummer einer Protokolldateneinheit ist, zu der das Ende jeder zurückgewiesenen Dienstdateneinheit gehört.

22. Verfahren nach Anspruch 14, wobei dann, wenn das MRW-Sendeeinstellungskennzeichen nicht konfiguriert ist, die Zurückweisungsinformationen über die zurückgewiesene wenigstens eine Dienstdateneinheit das Ende jener letzten Dienstdateneinheit der zurückgewiesenen wenigstens einen Dienstdateneinheit, von der versucht wurde, sie zu senden, anzeigt.

23. Verfahren nach Anspruch 22, wobei die Zurückweisungsinformationen eine Folgenummer einer Protokolldateneinheit sind, zu der das Ende jener letzten Dienstdateneinheit der zurückgewiesenen wenigstens einen Dienstdateneinheit, von der versucht wurde, sie zu senden, gehört.

24. Verfahren nach Anspruch 18, wobei das LENGTH-Feld auf "0000" gesetzt ist, wenn die letzte gesendete Dienstdateneinheit der zurückgewiesenen wenigstens einen Dienstdateneinheit einen Bereich des Sendefensters überschreitet.

25. Sender zum Gebrauch in einem Funkkommunikationssystem, wobei der Sender ausgelegt ist, ein Verfahren nach einem der Ansprüche 1 bis 13 auszuführen.

26. Empfänger zum Gebrauch in einem Funkkommunikationssystem, wobei der Empfänger ausgelegt ist, ein Verfahren nach einem der Ansprüche 14 bis 24 auszuführen.

## Revendications

1. Procédé de transmission de données d'une couche RLC fonctionnant dans un mode avec accusé de réception dans un système de radiocommunication, comprenant les étapes de :
- le stockage d'unités de données de service, SDU, reçues d'une couche supérieure dans une mémoire tampon de transmission ;
- la transformation des unités de données de service de la couche supérieure en unités de données de protocole, PDU, à transmettre à un côté de réception ;
- le rejet d'au moins une unité de données de service ; et
- la transmission d'informations de rejet de l'au moins une unité de données de service rejetée au côté de réception ;
**caractérisé par**
- le contrôle si un indicateur de réglage de transmission MRW est configuré ; et
- si l'indicateur de réglage de transmission MRW est configuré, la transmission de toutes les informations de rejet au sujet de chaque unité de données de service rejetée ; ou
- si l'indicateur de réglage de transmission MRW n'est pas configuré, la transmission d'informations de rejet au sujet de la dernière unité de données de service qu'il a été essayé de transmettre parmi l'au moins une unité de données de service rejetée.

2. Procédé selon la revendication 1, dans lequel les informations de rejet au sujet de l'au moins une unité de données de service rejetée correspondent à une information de déplacement de position d'une fenêtre de réception du côté de réception.

3. Procédé selon la revendication 1, dans lequel l'au moins une unité de données de service est rejetée si une condition est satisfaite.

4. Procédé selon la revendication 3, dans lequel la condition est satisfaite en cas d'échec de la transmission de l'au moins une unité de données de service au côté de réception à l'expiration d'une période de temps prédéterminée après la réception de l'au moins une unité de données de service de la couche supérieure.

5. Procédé selon la revendication 3, dans lequel la condition est satisfaite en cas d'échec de la réception d'un signal d'accusé de réception, ACK, du côté de réception même si une unité de données de protocole correspondant à l'au moins une unité de données de service est transmise un nombre prédéterminé de fois.

6. Procédé selon la revendication 1, dans lequel les informations de rejet de l'unité de données de service sont chargées dans un indicateur de déplacement de fenêtre à transmettre au côté de réception.

7. Procédé selon la revendication 6, dans lequel indicateur de déplacement de fenêtre est un super champ de déplacement de fenêtre MRW SUFI.

8. Procédé selon la revendication 7, dans lequel le super champ de déplacement de fenêtre de réception comprend un champ LENGTH indiquant si une unité de données de service transmise en dernier de l'au moins une unité de données de service rejetée dépasse une plage de la fenêtre de transmission, un champ SN_MRW_{LENGTH} indiquant un numéro de séquences d'une dernière unité de données de protocole comprenant l'unité de données de service transmise en dernier, et un champ N_{LENGTH} indiquant un ordre spécifique de l'unité de données de service transmise en dernier dans la dernière unité de données de protocole portant le numéro de séquence.

9. Procédé selon la revendication 1, dans lequel, lorsque l'indicateur de réglage de transmission MRW est configuré, les informations au sujet de chaque unité de données de service rejetée indiquent la fin de chaque unité de données de service rejetée.

10. Procédé selon la revendication 9, dans lequel les informations au sujet de chaque unité de données de service rejetée sont un numéro de séquence d'une unité de données de protocole à laquelle appartient la fin de chaque unité de données de service rejetée.

11. Procédé selon la revendication 1, dans lequel, lorsque l'indicateur de réglage de transmission MRW n'est pas configuré, les informations de rejet au sujet de l'au moins une unité de données de service rejetée indiquent la fin de la dernière unité de données de service qu'il a été essayé de transmettre parmi l'au moins une unité de données de service rejetée.

12. Procédé selon la revendication 11, dans lequel les informations de rejet sont un numéro de séquence d'une unité de données de protocole à laquelle appartient la fin de la dernière unité de données de service qu'il a été essayé de transmettre parmi l'au moins une unité de données de service rejetée.

13. Procédé selon la revendication 8, dans lequel le champ LENGTH est réglé sur « 0000 » lorsque la dernière unité de données de service transmise de l'au moins une unité de données de service rejetée dépasse une plage de la fenêtre de transmission.

14. Procédé de réception de données dans une couche RLC fonctionnant dans un mode avec accusé de réception dans un système de radiocommunication, comprenant les étapes de :
- la réception d'informations de rejet d'au moins une unité de données de service rejetée dans une mémoire tampon de transmission sur un côté de transmission ; et
- le déplacement d'une position de la fenêtre de réception en fonction des informations de rejet reçues ;
**caractérisé en ce que**
- les informations de rejet comprennent
-- toutes les informations au sujet de chaque unité de données de service rejetée si un indicateur de réglage de transmission MRW est configuré sur le côté de transmission ; ou
-- des informations au sujet de la dernière unité de données de service qu'il a été essayé de transmettre parmi l'au moins une unité de données de service rejetée, si l'indicateur de réglage de transmission MRW n'est pas configuré sur le côté de transmission.

15. Procédé selon la revendication 14, dans lequel les informations au sujet de l'au moins une unité de données de service rejetée correspondent à une information de déplacement de position de la fenêtre de réception.

16. Procédé selon la revendication 15, dans lequel l'information de déplacement de position de la fenêtre de réception est reçue à la couche de commande de liaison radio à travers un champ d'une unité de données de protocole de statut transmettant des informations de commande.

17. Procédé selon la revendication 16, dans lequel le champ de l'unité de données de protocole de statut est un super champ de déplacement de fenêtre de réception.

18. Procédé selon la revendication 17, dans lequel le super champ de déplacement de fenêtre de réception comprend un champ LENGTH indiquant si une unité de données de service transmise en dernier de l'au moins une unité de données de service rejetée dépasse une plage de la fenêtre de transmission.

19. Procédé selon la revendication 18, dans lequel le super champ de déplacement de fenêtre de réception comprend en outre un champ SN_MRW_{LENGTH} indiquant un numéro de séquences d'une dernière unité de données de protocole comprenant l'unité de données de service transmise en dernier, et un champ N_{LENGTH} indiquant un ordre spécifique de l'unité de données de service transmise en dernier dans la dernière unité de données de protocole portant le numéro de séquence.

20. Procédé selon la revendication 14, dans lequel, lorsque l'indicateur de réglage de transmission MRW est configuré, les informations au sujet de chaque unité de données de service rejetée indiquent la fin de chaque unité de données de service rejetée.

21. Procédé selon la revendication 20, dans lequel les informations au sujet de chaque unité de données de service rejetée sont un numéro de séquence d'une unité de données de protocole à laquelle appartient la fin de chaque unité de données de service rejetée.

22. Procédé selon la revendication 14, dans lequel, lorsque l'indicateur de réglage de transmission MRW n'est pas configuré, les informations de rejet au sujet de l'au moins une unité de données de service rejetée indiquent la fin de la dernière unité de données de service qu'il a été essayé de transmettre parmi l'au moins une unité de données de service rejetée.

23. Procédé selon la revendication 22, dans lequel les informations de rejet sont un numéro de séquence d'une unité de données de protocole à laquelle appartient la dernière unité de données de service qu'il a été essayé de transmettre parmi l'au moins une unité de données de service rejetée.

24. Procédé selon la revendication 18, dans lequel le champ LENGTH est réglé sur « 0000 » lorsque la dernière unité de données de service transmise de l'au moins une unité de données de service rejetée dépasse une plage de la fenêtre de transmission.

25. Emetteur destiné à être utilisé dans un système de radiocommunication, l'émetteur étant apte à effectuer un procédé selon l'une quelconque des revendications 1 à 13.

26. Récepteur destiné à être utilisé dans un système de radiocommunication, le récepteur étant apte à effectuer un procédé selon l'une quelconque des revendications 14 à 24.
